# EUROPEAN PATENT APPLICATION

(11) **EP 1 511 024 A2**
(43) Date of publication of application: **02.03.2005**
(21) Application number: 04253763.9
(22) Date of filing: 23.06.2004
(51) Int. Cl.: G11B 7/135

(54) **Spherical aberration correction plate**

(30) Priority: 27.08.2003 JP 2003303387
(71) Applicant: Mitsumi Electric Co., Ltd., Tama-Shi, Tokyo (JP)
(72) Inventor: Kan, Kenji, Tama-shi Tokyo (JP)
(74) Representative: Haley, Stephen

(57) **Abstract**

A spherical aberration corrector plate (19) has two wedge-shaped plates (33, 35) having inclined planes (33a, 35a) opposed to each other. The two wedge-shaped plates (33, 35) have a constant refractive index and are enabled to relatively shift in at least a direction perpendicular to an optical axis. The two wedge-shaped plates (33, 35) are shifted with the inclined planes (33a, 35a) in contact with each other. Alternatively, the two wedge-shaped plates may be put into a state where the inclined planes are in contact with each other when the two wedge-shaped plate extremely come close to each other. Otherwise, the two wedge-shaped plates may be put into a state where the inclined plates are apart from each other.

## Description

This invention relates to a spherical aberration corrector element and, more particularly, to a spherical aberration corrector plate for use in an optical pickup unit contained in an optical disc drive.

In the manner known in the art, an optical pickup unit is a unit for converging a laser beam produced by a semiconductor laser serving as an optical source on a signal recording surface of an optical disc through an objective lens and for detecting a return beam from the signal recording surface by a photodetector serving as optical detecting means.

In general, an optical pickup unit comprises a semiconductor laser (laser diode), a diffraction grating, a polarization beam splitter, a collimator lens, a rising mirror (holding mirror), a quarter wavelength plate, an objective lens, a sensor lens, a photodetector (photodiode).

The semiconductor laser radiates a laser beam as an outgoing laser beam. The outgoing laser beam is separated into three laser beams by the diffraction grating. The three laser beams transmit the polarization beam splitter as a transmitted laser beam. The transmitted laser beam is collimated into a collimated beam by the collimator lens and thereafter is reflected at a right angle by the rising mirror. Reflected by the rising mirror, the laser beam is converted into a circular polarized beam by the quarter wavelength plate and thereafter is converged (irradiated) on a signal recording surface of an optical disc through the objective lens.

Reflected by the signal recording surface of the optical disc, a reflected beam (return beam) passing through the objective lens, a polarization direction of the laser beam is bent at a right angle from that of outward by the quarter wavelength plate, the laser beam passes through the collimator lens, is reflected at a right angle by the polarization beam splitter, and is detected by the photodetector.

It will be, for example, assumed that the optical disc is a high-density optical disc such as a Blue-ray disc. In this event, it is necessary to make a spot size of the laser beam small on the signal recording surface of the optical disc on focusing. Therefore, a method of making the wavelength of the laser diode acting as the light source short and of making a numerical aperture (NA) of the objective lens large is adopted. The wavelength of the laser diode is, for example, 405nm and the numerical aperture (NA) of the objective lens is, for example, 0.85.

Under the circumstances, the spot size on focusing becomes small so that a diameter φ thereof is, for example, 0.35µm. However, spherical aberration occurs caused by dispersion of a disc's thickness of the optical disc and the spot size of the laser beam becomes larger on the signal recording surface of the optical disc. In the manner as known in the art, the "disc's thickness" of the optical disc is a distance between an incident surface of the laser beam and the signal recording surface in the optical disc. The Blue-ray disk has the disc's thickness of 0.1 ± 0.002 mm which is determined by standard. In addition, the "spherical aberration" means a phenomenon where rays produced by one point of an optical axis shift before and after without converging on one point on the axis after they pass through a lens. More specifically, the spherical aberration means that a ray near to the optical axis and a ray apart from the optical axis come to a focus at different distances along the axis when a collimated beam is incident to the lens. As a result, reproduced jitters and self-recorded re-jitters are degraded.

Therefore, in past, methods of making the spherical aberration small are adopted. Such methods are mainly classified into first and second methods as follows.

The first method uses a liquid crystal device (liquid crystal element) as the spherical aberration corrector element (e.g. see JP-2000-353333 A, US-2002/0012312 A1, US-6,678,232 B2). The first method is a method of correcting the spherical aberration so as to minimize it by changing a reflective index of the liquid crystal device at a center or near to the optical axis and at a peripheral thereof by applying a voltage to the liquid crystal device if necessary.

An example where a liquid crystal element is mounted on an optical pickup unit is already known (e.g. see US-2002/0105890 A1 ). Such an optical pickup unit, coma aberration or the like occurs if a center of the liquid crystal element and a center of the objective lens mismatch with each other. The "coma aberration" means aberration where an image of an object point outside an axis due to an optical system having a symmetrical axis does not converge, and the image has a symmetrical distribution for a meridional plane containing a main ray while the image has an asymmetrical distribution for a sagittal plane. Therefore, the liquid crystal element must be inserted to the optical pickup unit with the optical axis matched to a first surface side (incident ray side) of the objective lens of an actuator. The actuator comprises a movable portion including a lens holder for holding the objective lens and a damper base for supporting the movable portion through a plurality of suspension wires extending from both side thereof so as to enable to shift in a focusing direction and in a tracking direction. Therefore, it is necessary to put the liquid crystal element in the movable portion as a part of the movable portion with the liquid crystal element always maintained to a predetermined position relationship to the objective lens. As a result, the movable portion of the actuator has an increased weight and the movable portion into which not only the objective lens but also the liquid crystal element are integrated must be shifted in the focusing direction and in the tracking direction. Accordingly, it is impossible to access the optical disc drive at a high speed.

The second method is a method for correcting the spherical aberration in total by making the objective lens incident a diverged ray or a converged ray in accordance with the disc's thickness of the optical disc.

As an example of the second method, there is a method of making the diverged ray of the converged ray by moving a collimator lens along the optical axis (e.g. see JP-09-017023 A). However, there is some possibility to increasing the coma aberration by shifting a center of the collimator lens from a center of the optical axis when the collimator lens is moved along a direction of the optical axis.

In addition, as another example of the second method, proposal is made a method of changing, by applying a voltage to a diffraction type optical element lens inserted between a laser diode and the collimator lens, a diffractive index of the diffraction type optical element lens (e.g. see JP-10-143903 A). A liquid crystal element may be used as a diffraction type optical element constituting the diffraction type optical element lens. However, this method is applicable to an optical pickup for sharing/reproducing a plurality of optical discs with different thickness and never corrects the spherical aberration by changing the diffractive index of the diffraction type optical element lens for a little variation of the disc's thickness of one optical disc.

In the manner which is described above, the first conventional method is disadvantageous in that it is impossible to access the optical disc drive because the movable portion of the actuator has an increased weight. On the other hand, the second conventional method is disadvantageous in that the coma aberration is increased and it is difficult to correct the spherical aberration due to the variation of the disc's thickness of one optical disc.

It is therefore an object of this invention to provide a spherical aberration corrector plate which is capable of correcting spherical aberration and which is adapted to be used in an optical pickup unit comprising an actuator enabled to access at a high speed.

It is another object of this invention to provide a spherical aberration corrector plate of the type described, which is capable of correcting the spherical aberration without increasing coma aberration.

It is still another object of this invention to provide a spherical aberration corrector plate of the type described, which is capable to correcting the spherical aberration caused by a little of variations of a disc's thickness of one optical disc.

Other objects of this invention will become clear as the description proceeds.

According to a first aspect of this invention, a spherical aberration corrector plate is for use in an optical pickup unit consisting of an infinite optical system. The spherical aberration corrector plate comprises two wedge-shaped plates disposed in a diverged ray. The two wedge-shaped plates have inclined planes opposed to each other. The two wedge-shaped plates have a constant refractive index and are enabled to relatively shift in at least a direction perpendicular to an optical axis of the optical pickup unit.

In the above-mentioned spherical aberration corrector plate, the two wedge-shaped plates may be shifted with the inclined planes in contact with each other. Alternatively, the two wedge-shaped plates may be put into a state where the inclined planes are in contact with each other when the two wedge-shaped plate extremely come close to each other. Otherwise, the two wedge-shaped plates may be put into a state where the inclined planes are apart from each other. Each of the two wedge-shaped plates preferably may have both faces with antireflection coatings.

According to a second aspect of this invention, an optical pickup unit comprises at least a semiconductor laser, a beam splitter, a collimator lens, an objective lens, and a photodetector. The optical pickup unit comprise a spherical aberration corrector plate inserted in a diverged ray between the semiconductor laser and the collimator lens. The spherical aberration corrector plate is for correcting spherical aberration caused by variations of a disc's thickness of an optical disc. The spherical aberration corrector plate has a constant refractive index and an adjustable effective plate thickness.

In the above-mentioned optical pickup unit, the spherical aberration corrector plate may preferably comprise two wedge-shaped plates having inclined planes opposed to each other. The two wedge-shaped plates have a constant refractive index and are enabled to relatively shift in at least a direction perpendicular to an optical axis of the optical pickup unit. Each of the two wedge-shaped plates may preferably have both faces with antireflection coatings. The optical disc comprises, for example, a Blue-ray disc. The spherical aberration corrector plate may be inserted between the beam splitter and the collimator lens.

According to a third aspect of this invention, a method is of correcting spherical aberration caused by dispersion of a disc's thickness of an optical disc in an optical pickup unit comprising at least a semiconductor laser, a beam splitter, a spherical aberration corrector plate, a collimator lens, an objective lens, and a photodetector. The method comprises the steps of detecting the disc's thickness, and of changing, in response to the detected disc's thickness, an effective plate thickness of the spherical aberration corrector plate inserted in a diverged ray so as to minimize the spherical aberration.

In the above-mentioned method, the spherical aberration corrector plate may comprise two wedge-shaped plates having inclined planes opposed to each other. In this event, the step of changing the effective plate thickness of the spherical aberration corrector plate may comprise the step of relatively shifting the two wedge-shaped plates in at least a direction perpendicular to an optical axis of the optical pickup unit.

In the Drawings;
Fig. 1 is a view showing an optical system of an optical pickup unit to which a spherical aberration corrector plate according to this invention is applicable;
Figs. 2A through 2C are front views showing respective states (modes) of schematic structure of the spherical aberration corrector plate according to a first embodiment of this invention;
Figs. 3A through 3C are front views showing respective states (modes) of schematic structure of a spherical aberration corrector plate according to a second embodiment of this invention;
Fig. 4 is a graph showing an example of a relationship between a disc's thickness of an optical disc and an effective plate thickness of the spherical aberration corrector plate having a minimal spherical aberration; and
Fig. 5 is a graph showing an example of simulation results showing relationships between the disc's thickness of the optical disc and wave aberration in a case where there is no spherical aberration correction and in a case where there is spherical aberration correction.

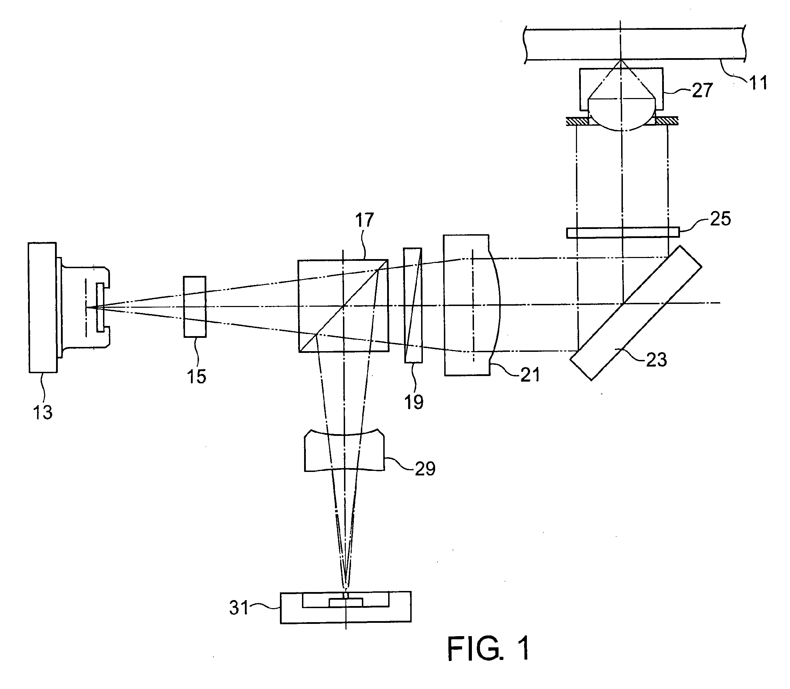

Referring to Fig. 1, the description will proceed to an optical pickup unit including a spherical aberration corrector plate according to a first embodiment of this invention. Fig. 1 is a view showing an optical system of the optical pickup unit.

The illustrated optical pickup unit is a unit for carrying out reproduction of information in an optical disc (optical recording medium). The illustrated optical disc is a Blue-ray disc having a disc's thickness of 0.1 ± 0.002 mm which is determined by standard.

The optical pickup unit is an optical pickup unit consisting of an infinite optical system. The optical pickup unit comprises a semiconductor laser (laser diode) 13, a diffraction grating 15, a polarization beam splitter 17, a spherical aberration corrector plate 19 according to this invention, a collimator lens 21, a rising mirror (holding mirror) 23, a quarter wavelength plate 25, an objective lens 27, a sensor lens 29, and a photodetector (photodiode) 31. In the example being illustrated, the semiconductor laser 13 radiates a laser ray having an oscillation wavelength of 405nm. In addition, the objective lens 27 has a numerical aperture (NA) of 0.85. Structure and operation of the spherical aberration corrector plate 19 will later be described.

Description will be made as regards schematic operation of the optical pickup unit illustrated in Fig. 1. The semiconductor laser 13 radiates the laser ray as an outgoing laser ray. The outgoing laser ray is separated into three laser rays by the diffraction grating 15. The three laser rays transmit the polarization beam splitter 17 as a transmitted laser ray. The transmitted laser ray transmits the spherical aberration corrector plate 19 and is collimated into a collimated ray by the collimator lens 21. In the manner which will become clear as the description proceeds, the ray transmitted from the collimator lens 21 is strictly not the collimated ray but is a diverged ray or a converged ray in accordance with an effective plate thickness of the spherical aberration corrector plate 19.

Transmitted from the collimator lens 21, the collimated ray is reflected at a right angle by a reflection surface of the rising mirror 23. Reflected by the rising mirror 23, the laser ray is converted into a circular polarized ray from a linear polarized ray by the quarter wavelength plate 25 and thereafter is converged (irradiated) on a signal recording surface of the optical disc 11 through the objective lens 27.

Reflected by the signal recording surface of the optical disc 11, a reflected ray (return ray) passes through the objective lens 27, a polarization direction of the laser ray is bent at a right angle from that of outward by the quarter wavelength plate 25, the laser ray is reflected at a right angle by the reflection surface of the rising mirror 23, passes through the collimator lens 21 and the spherical aberration corrector plate 19, is reflected at a right angle by the polarization beam splitter 17, and is detected by the photodetector 31 through the sensor lens 29.

In the example being illustrated, the spherical aberration corrector plate 19 is inserted between the polarization beam splitter 17 and the collimator lens 21 so that a focused position of the photodetector 31 does not change. However, this invention is not restricted to this, the spherical aberration corrector plate 19 may be disposed in the diverged ray between the semiconductor laser 13 and the collimator lens 21.

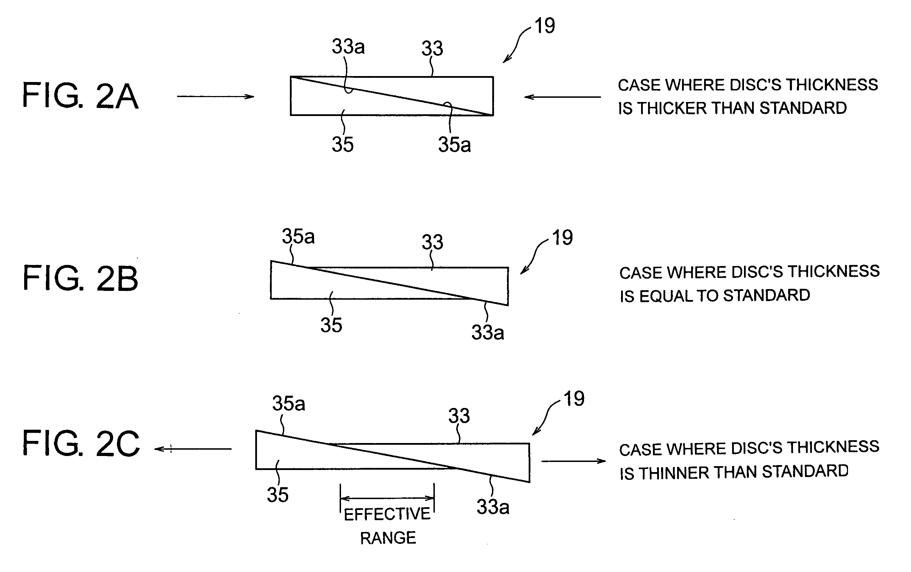

Referring now to Figs. 2A, 2B, and 2C, the description will proceed to structure of the spherical aberration corrector plate 19 according to the first embodiment of this invention. Fig. 2A shows a state (mode) of the spherical aberration corrector plate 19 in a case where the disc's thickness of the optical disc 11 is thicker than the standard of 0.1 mm. Fig. 2B shows a state (mode) of the spherical aberration corrector plate 19 in a case where the disc's thickness of the optical disc 11 is equal to the standard of 0.1 mm. Fig. 2C shows a state (mode) of the spherical aberration corrector plate 19 in a case where the disc's thickness of the optical disc 11 is thinner than the standard of 0.1 mm.

As shown in Figs. 2A through 2C, the spherical aberration corrector plate 19 comprises two wedge-shaped plates 33 and 35 having inclined planes 33a and 35a which are opposed to each other. The two wedge-shaped plates 33 and 35 have a constant refractive index. The two wedge-shaped plates 33 and 35 may be, for example, made of glass. However, they are not restricted to the glass, the two wedge-shaped plates 33 and 35 may be made of ones having the constant refractive index that are transparent to the laser ray.

The two wedge-shaped plates 33 and 35 are enabled to relatively shift in at least a direction perpendicular to an optical axis of the optical pickup unit by a driving arrangement (not shown). Each of the two wedge-shaped plates 33 and 35 has both faces with antireflection coatings.

Now, description will be made as regards operation of the spherical aberration corrector plate 19 illustrated in Figs. 2A through 2C. It will be now assumed that the disc's thickness of the optical disc 11 is equal to the standard of 0.1 mm. In this event, the spherical aberration corrector plate 19 is not driven by the driving arrangement, as shown in Fig. 2B. Accordingly, the spherical aberration corrector plate 19 has an effective plate thickness of standard. Under the circumstances, inasmuch as the ray transmitted from the collimator lens 21 is the collimated ray, the collimated ray is supplied to the objective lens 27. It is therefore possible to make the ray from the objective lens 27 converge (irradiate) on the signal recording surface of the optical disc 11.

It will be now assumed that the disc's thickness of the optical disc 11 is thicker than the standard of 0.1 mm. In this event, the spherical aberration corrector plate 19 is shifted, by the driving arrangement, in a direction where the two wedge-shaped plates 33 and 35 approach to each other, as shown in an arrow of Fig. 2A. Accordingly, the spherical aberration corrector plate 19 has the effective plate thickness which is thicker than the standard (Fig. 2B). Under the circumstances, inasmuch as the ray transmitted from the collimator lens 21 is the diverged ray, the diverged ray is supplied to the objective lens 27. It is therefore possible to make the ray from the objective lens 27 converge (irradiate) on the signal recording surface of the optical disc 11.

It will be now assumed that the disc's thickness of the optical disc 11 is thinner than the standard of 0.1 mm. In this event, the spherical aberration corrector plate 19 is shifted, by the driving arrangement, in a direction where the two wedge-shaped plates 33 and 35 are apart from each other, as shown in an arrow of Fig. 2C. Accordingly, the spherical aberration corrector plate 19 has the effective plate thickness which is thinner than the standard (Fig. 2B). Under the circumstances, inasmuch as the ray transmitted from the collimator lens 21 is the converged ray, the converged ray is supplied to the objective lens 27. It is therefore possible to make the ray from the objective lens 27 converge (irradiate) on the signal recording surface of the optical disc 11.

In the manner as described above, according to this invention, the spherical aberration is cancelled by changing parallelism (in a case of the infinite optical system) of a ray transmitted from the objective lens 27 to form spherical aberration reversing the spherical aberration occurring due to different disc's thicknesses of the optical disc 11. In other words, the method according to this invention belongs to the second method described in the prior art.

In the example shown in Figs. 2A through 2C, the two wedge-shaped plates 33 and 35 are shifted with the inclined planes 33a and 35a in contact with each other by the driving arrangement. Accordingly, in the example being illustrated, the effective plate thickness of the spherical aberration corrector plate 19 is equal to a physical plate thickness thereof. However, it may be actually difficult to shift the two wedge-shaped plates 33 and 35 with the inclined planes 33a and 35a in contact with each other by the driving arrangement.

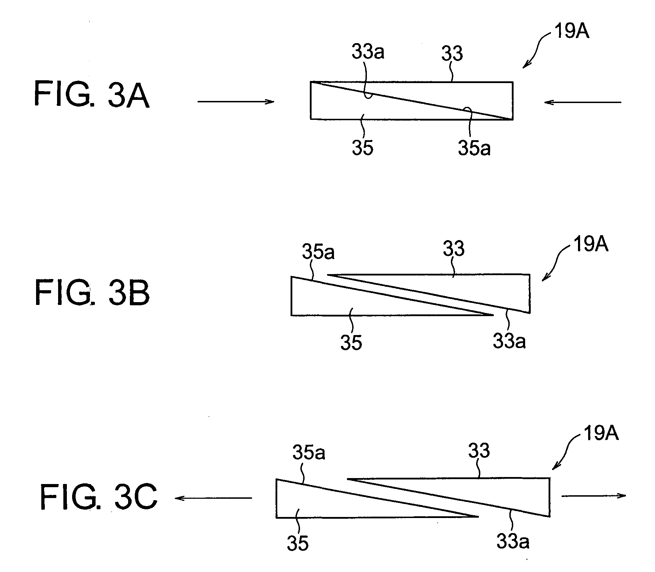

Referring to Figs. 3A, 3B, and 3C, the description will proceed to structure of a spherical aberration corrector plate 19A according to a second embodiment of this invention. Fig. 3A shows a state (mode) of the spherical aberration corrector plate 19A in a case where the disc's thickness of the optical disc 11 is thicker than the standard of 0.1 mm. Fig. 3B shows a state (mode) of the spherical aberration corrector plate 19A in a case where the disc's thickness of the optical disc 11 is equal to the standard of 0.1 mm. Fig. 3C shows a state (mode) of the spherical aberration corrector plate 19A in a case where the disc's thickness of the optical disc 11 is thinner than the standard of 0.1 mm.

In the illustrated embodiment also, the spherical aberration corrector plate 19A comprises the two wedge-shaped plates 33 and 35. However, different from those illustrated in Figs. 2A through 2C, the two wedge-shaped plates 33 and 35 are relatively shifted in only the direction perpendicular to the optical axis of the optical pickup unit. In other words, the illustrated spherical aberration corrector plate 19A is similar to the spherical aberration corrector plate 19 illustrated in Figs. 2A through 2C except that a driving method (the driving arrangement) is different from each other. Accordingly, the two wedge-shaped plates 33 and 35 are put into a state where the inclined planes 33a and 35a are in contact with each other when the two wedge-shaped plates 33 and 35 extremely come close to each other (see Fig. 3A). Otherwise (see Figs. 3B and 3C), the two wedge-shaped plates 33 and 35 are put into a state where the inclined planes 33a and 35a are apart from each other. In the spherical aberration corrector plate 19A having such structure, it is possible to easily construct the driving arrangement as compared with that shown in Figs. 2A through 2C. Inasmuch as operation of the spherical aberration corrector plate 19A is similar to that of the spherical aberration corrector plate 19 illustrated in Figs. 2A through 2C, description thereof is omitted.

In the illustrated spherical aberration corrector plate 19A, which is different from the spherical aberration corrector plate 19 illustrated in Figs. 2A through 2C, the effective plate thickness thereof is changed in accordance with the disc's thickness of the optical disc 11 without the physical plate thickness thereof. In other words, in the spherical aberration corrector plate 19A, even if the two wedge-shaped plates 33 and 35 are separated from each other (there is a space or a gap between the two wedge-shaped plates 33 and 35), the spherical aberration corrector plate 19A illustrated in Figs. 3A through 3C have plate thicknesses, which effectively act as the refractive index, equal to those of the spherical aberration corrector plate 19 illustrated in Figs. 2A through 2C, respectively.

Although both of the two wedge-shaped plates 33 and 35 are shifted in the opposite direction to each other in the spherical aberration corrector plates 19 and 19A illustrated in Figs. 2A through 2C and Figs. 3A through 3C, one of the two wedge-shaped plates 33 and 35 may be fixed while the other may be shifted.

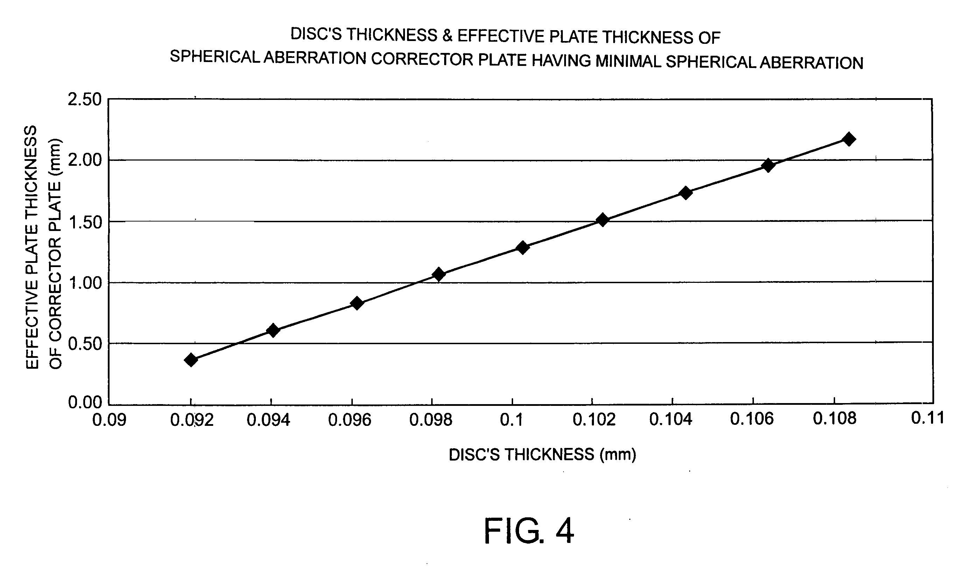

Fig. 4 shows a relationship between the disc's thickness of the optical disc 11 and the effective plate thickness of the spherical aberration corrector plate 19 (19A) where the spherical aberration is kept to a minimum. In other words, Fig. 4 shows an example of the optimal effective plate thickness of the spherical aberration corrector plate 19 (19A) every the disc's thickness of the optical disc 11. In Fig. 4, the abscissa represents the disc's thickness [mm] of the optical disc 11 and the ordinate represents the effective plate thickness [mm] of the spherical aberration corrector plate 19 (19A).

From Fig. 4, it is understood that the optimal effective plate thickness of the spherical aberration corrector plate 19 (19A) becomes thick when the disc's thickness of the optical disc 11 becomes thick.

Now, description will proceed to a method of making the effective plate thickness of the spherical aberration corrector plate 19 (19A) an optimal thickness in accordance with the disc's thickness of the optical disc 11.

Herein, the description will be made as regards operation in a case of recording a signal (data) in the optical disc 11 using the optical pickup unit illustrated in Fig. 1. In this event, before data is recorded in the optical disc 11, the spherical aberration corrector plate 19 (19A) is shifted, a part where the self-recording re-jitter of a cross-talk becomes minimum, and the effective plate thickness of the spherical aberration corrector plate 19 (19A) is made to the optimal thickness. For this purpose, the spherical aberration corrector plate 19 (19A) is preliminarily shifted to carry out test recording to the optical disc 11, and the optimal thickness is determined by reproducing test recorded data from the optical disc 11.

Another method, which will presently be described, may be adapted. That is, when the spherical aberration is increased, there is generally a tendency for a primary ring of a spot of the laser beam to increase in the signal recording surface of the optical disc 11. Accordingly, an increased amount of the primary ring is detected by a sensor (not shown), a circuit (not shown) for correcting the increased amount of the primary ring is provided, and the effective plate thickness of the spherical aberration corrector plate 19 (19A) is made to the optimal thickness.

Now, description will proceed to an example of the method (driving arrangement) for moving the spherical aberration corrector plate 19 (19A). One (or both) of the two wedge-shaped plates 33 and 35 composing the spherical aberration corrector plate 19 (19A) is inserted in a holder (not shown) or the like, and a coil is wound around the holder or the like. On the other hand, a magnet is pasted to a casing body side. By flowing current in the coil of the holder side, the spherical aberration corrector plate 19 (19A) is moved.

As another example of the driving method (driving arrangement), a method of driving the spherical aberration corrector plate 19 (19A) using a motor or the like may be adopted.

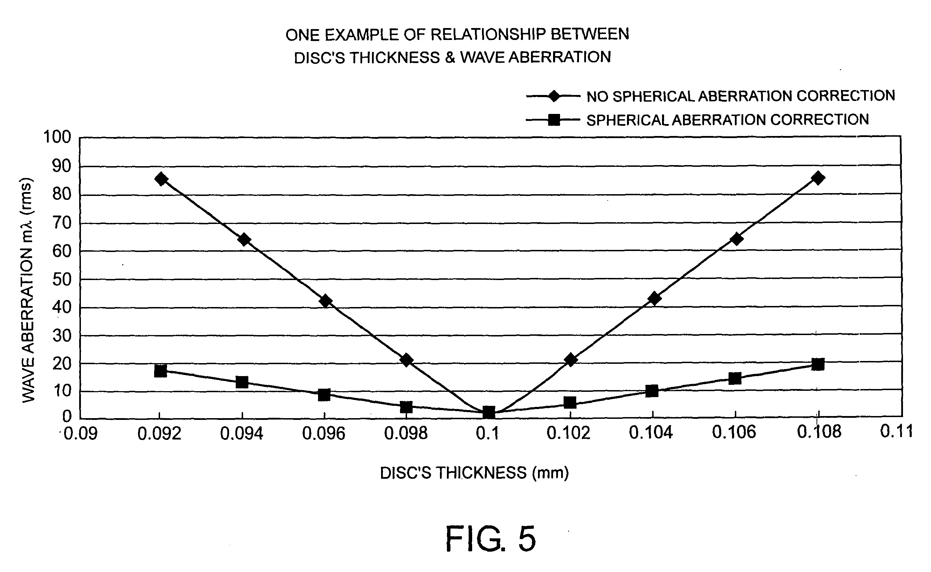

Fig. 5 shows an example of a relationship between the disc's thickness of the optical disc 11 and wave aberration. In Fig. 5, the abscissa represents the disc's thickness [mm] of the optical disc 11 and the ordinate represents the wave aberration [mλ(rms)]. In Fig. 5, black diamonds represent simulation results in a case where there is no spherical aberration correction and black squares represent simulation results in a case where there is spherical aberration correction.

Usually, one called aberration in an optical system indicates the wave aberration. In addition, the wave aberration has a component of a root mean square value of Seidel's five aberrations which will presently be described. Usually, the aberrations in a lens are classified into five items which are called the "Seidel's five aberrations" because L. von Seidel had put forward in the 1850s. The five items are (1) spherical, (2) astigmatism, (3) curvature of field, (4) coma, and (5) distortion. For example, among the Seidel's five aberrations, if the spherical aberration becomes large, the wave aberration becomes large naturally. The object of this invention is to correct the aberration occurring caused by the disc's thickness and the aberration occurring caused by the disc's thickness is only the spherical aberration. In addition, inasmuch as the spherical aberration is included in the wave aberration in the manner which is described above, the wave aberration is denoted in Fig. 5.

From Fig. 5, it is understood, in the case where there is "no spherical aberration correction", that the wave aberration (spherical aberration) is equal to zero when the disc's thickness of the optical disc 11 is the standard of 0.1 mm and the wave aberration (spherical aberration) becomes large drastically when the disc's thickness of the optical disc 11 is thinner or thicker than the standard of 0.1 mm. On the other hand, it is understood, in the case where there is "spherical aberration correction", that the wave aberration (spherical aberration) is equal to zero when the disc's thickness of the optical disc 11 is the standard of 0.1 mm and the wave aberration (spherical aberration) does not become large even if the disc's thickness of the optical disc 11 is thinner or thicker than the standard of 0.1 mm.

In the manner which is described above, according to this invention, it is possible to reduce the wave aberration (spherical aberration) caused by variations of the disc's thickness of the optical disc 11 by inserting the spherical aberration corrector plate 19 (19A) in the optical pickup unit and by optimizing the effective plate thickness thereof.

In addition, as regards the disc's thickness of the optical disc 11, assumption can be made in a case of differing from every optical disc and in another case of differing from every location (e.g. radial location) of one optical disc.

In the case of the former, an average disc's thickness of the optical disc in question is detected and the effective plate thickness of the spherical aberration corrector plate 19 (19A) is changed on the basis of its detected result.

In the case of the latter, it is possible to adopt two correction methods as follows. A first correction method comprises the steps of preliminarily scanning the optical disc 11 in a radial direction by the optical pickup unit before recording/reproducing to detect the disc's thickness every radial location of the optical disc 11, and of memorizing its detected results in a memory (not shown) with the radial locations of the optical disc made as addresses of the memory. On really recording/reproducing, the first correction method further comprises the steps of accessing the memory with an actual radial location of the optical disc 11 made an address thereof to obtain a disc's thickness at that time, and of making the effective plate thickness of the spherical aberration corrector plate 19 (19A) change on the basis of the obtained disc's thickness. A second correction method comprises the steps of detecting a disc's thickness of the optical disc at a seeking location of the optical pickup unit at a real time, of making the effective plate thickness of the spherical aberration corrector plate 19 (19A) change at the real time on the basis of its detected result.

In the manner which is described above, in the case of the latter, it is possible to correct the spherical aberration caused by a little change of the disc's thickness of one optical disc.

In addition, in a case of making the effective plate thickness of the spherical aberration corrector plate 19 (19A) change on the detected disc's thickness of the optical disc 11, it is possible, for example to adopt a method as follows. The method comprises the steps of preliminarily storing data indicative of the relationship between the disc's thickness of the optical disc and the effective plate thickness of the spherical aberration corrector plate having the minimum spherical aberration illustrated in Fig. 4 in a random access memory (ROM) (not shown) with disc's thicknesses of the optical disc as addresses thereof, of calculating the optimal effective plate thickness of the spherical aberration corrector plate by accessing the ROM when recording/reproducing of the optical disc 11 is really carried out, and of adjusting a real effective plate thickness of the spherical aberration corrector plate on the basis of the calculated effective plate thickness.

Furthermore, various methods can be adopted as a method (means) for detecting the disc's thickness of the optical disc 11. By way of example, such a detecting method (means) is disclosed in JP-2003-16660 A, JP-2003-22545 A, JP-2003-109239, and so on.

In the foregoing description, the optical pickup consisting of the infinite optical system is described. Not being limited thereto, this invention is also applicable to an optical pickup having a finite optical system.

While this invention has thus far been described in conjunction with a few preferred embodiment thereof, it will now be readily possible for those skilled in the art to put this invention into various other manners. For example, although the above-mentioned embodiments are described in a case where this invention is applied to the optical pickup unit illustrated in Fig. 1, this invention certainly may be applicable to an optical pickup unit comprising at least a semiconductor laser, a beam splitter, a collimator lens, an objective lens, and a photodetector.

## Claims

1. A spherical aberration corrector plate (19; 19A) for use in an optical pickup unit, **characterized by** comprising two wedge-shaped plates (33, 35) disposed in a diverged ray, said two wedge-shaped plates having inclined planes (33a, 35a) opposed to each other, said two wedge-shaped plates having a constant refractive index and being enabled to relatively shift in at least a direction perpendicular to an optical axis of the optical pickup unit.

2. The spherical aberration corrector plate (19) as claimed in claim 1, wherein said two wedge-shaped plates (33, 35) are shifted with said inclined planes (33a, 35a) in contact with each other.

3. The spherical aberration corrector plate (19A) as claimed in claim 1, wherein said two wedge-shaped plates (33, 35) are put into a state where said inclined planes (33a, 35a) are in contact with each other when said two wedge-shaped plate extremely come close to each other, otherwise said two wedge-shaped plates (33, 35) being put into a state where said inclined planes (33a, 35a) are apart from each other.

4. The spherical aberration corrector plate as clamed in any one of claims 1-3, wherein each of said two wedge-shaped plates (33, 35) has both faces with antireflection coatings.

5. An optical pickup unit comprising at least a semiconductor laser (13), an objective lens (27), and a photodetector (31), wherein said optical pickup unit comprises:
a spherical aberration corrector plate (19; 19A) inserted in a diverged ray between said semiconductor laser (13) and said objective lens (27), said spherical aberration corrector plate being for correcting spherical aberration caused by variations of a disc's thickness of an optical disc (11), said spherical aberration corrector plate having a constant refractive index and an adjustable effective plate thickness.

6. The optical pickup unit as claimed in claim 5, wherein said spherical aberration corrector plate (19; 19A) comprises two wedge-shaped plates (33, 35) having inclined planes (33a, 35a) opposed to each other, said two wedge-shaped plates (19; 19A) having a constant refractive index and being enabled to relatively shift in at least a direction perpendicular to an optical axis of the optical pickup unit.

7. The optical pickup unit as claimed in claim 6, wherein each of said two wedge-shaped plates (33, 35) has both faces with antireflection coatings.

8. The optical pickup unit as claimed in claim 5, wherein said optical disc (11) comprises a Blue-ray disc.

9. An optical pickup unit comprising at least a semiconductor laser (13), a beam splitter (17), a collimator lens (21), an objective lens (27), and a photodetector (31), wherein said optical pickup unit comprises:
a spherical aberration corrector plate (19; 19A) inserted between said beam splitter (17) and said collimator lens (21), said spherical aberration corrector plate (19; 19A) being for correcting spherical aberration caused by variations of a disc's thickness of an optical disc (11), said spherical aberration corrector plate (19; 19A) having a constant refractive index and an adjustable effective plate thickness.

10. A method of correcting spherical aberration caused by dispersion of a disc's thickness of an optical disc (11) in an optical pickup unit comprising at least a semiconductor laser (13), a spherical aberration corrector plate (19; 19A), an objective lens (27), and a photodetector (31), wherein said method comprising the steps of:
detecting the disc's thickness; and
changing, in response to the detected disc's thickness, an effective plate thickness of the spherical aberration corrector plate (19; 19A) inserted in a diverged ray so as to minimize the spherical aberration.

11. The method as claimed in claim 10, said spherical aberration corrector plate (19; 19A) comprising two wedge-shaped plates (33, 35) having inclined planes (33a, 35a) opposed to each other, wherein said step of changing the effective plate thickness of said spherical aberration corrector plate (19; 19A) comprises the step of relatively shifting said two wedge-shaped plates (33, 35) in at least a direction perpendicular to an optical axis of the optical pickup unit.
